## Europäisches Patentamt
## European Patent Office
## Office européen des brevets

(19)

(11) Veröffentlichungsnummer: **0 226 719**
**B1**

(12)

# EUROPÄISCHE PATENTSCHRIFT

(45) Veröffentlichungstag der Patentschrift:
**05.07.89**

(51) Int. Cl.⁴: **F 16 L 11/16**

(21) Anmeldenummer: **86112616.7**

(22) Anmeldetag: **12.09.86**

(54) **Agraffschlauch mit vieleckigem Querschnitt.**

(30) Priorität: **24.12.85 DE 3546049**

(43) Veröffentlichungstag der Anmeldung:
**01.07.87 Patentblatt 87/27**

(45) Bekanntmachung des Hinweises auf die Patenterteilung:
**05.07.89 Patentblatt 89/27**

(84) Benannte Vertragsstaaten:
**AT CH DE FR GB IT LI SE**

(56) Entgegenhaltungen:
**DE-C- 238 621**
**FR-A- 470 048**

(73) Patentinhaber: **Witzenmann GmbH
Metallschlauch-Fabrik Pforzheim, Östliche
Karl-Friedrich-Strasse 134, D-7530 Pforzheim (DE)**

(72) Erfinder: **Förster, Walter, Heynlinstrasse 23,
D-7535 Königsbach-Stein (DE)**

(74) Vertreter: **Lemcke, Rupert, Dipl.-Ing. et al,
Patentanwälte Dipl.-Ing. R. Lemcke Dr.-Ing. H.J.
Brommer Bismarckstrasse 16 Postfach 4026,
D-7500 Karlsruhe 1 (DE)**

ACTORUM AG

## Beschreibung

Die Erfindung betrifft einen Agraffschlauch mit regelmäßig vieleckigem Querschnitt, ohne zusätzliche Dichtung schraubengangförmig gewickelt aus einem vorprofilierten Metallband unter Verfalzen benachbarter Bandkanten.

Ein solcher Schlauch ist aus DE-C-238 621 bekannt. Bei derartigen Agraffschläuchen geschieht die Verfalzung benachbarter Kanten dadurch, daß das Band im wesentlichen S-förmig profiliert wird, wobei in der Mitte des Profils ein Steg entsteht, der später im wesentlichen radial zum Schlauch liegt, und wobei die S-Haken benachbarter Bandkanten in hintergreifenden Eingriff gebracht werden, so daß der Falz in Radialrichtung des Schlauches gesehen aus vier Lagen des Bandmaterials besteht.

Von solchen Agraffschläuchen, die bestimmungsgemäß als bewegliche Leitungselemente verwendet werden, werden gleichzeitig angulare, axiale, laterale und torsionale Beweglichkeit und darüber hinaus ein hohes Maß an Dichtigkeit und Verdrehfestigkeit gefordert. Diese Forderungen stehen zueinander im Widerspruch. Denn gute Dichtigkeit und Verdrehfestigkeit erfordern ein festes Wickeln des Agraffschlauches, durch das jedoch seine Beweglichkeit zum Teil stark eingeschränkt wird. Derartige Schläuche waren daher bislang auch relativ undicht bzw. unbeweglich.

Umwelt- und Lärmschutzauflagen stellen inzwischen immer strengere Anforderungen an die Dichtigkeit der Agraffschläuche. Größere Nennweiten zur Erlangung niedriger Schallpegel und größere Beweglichkeit bei beengten Einbauverhältnissen werden gefordert. Diese Forderungen konnten bisher gleichzeitig nicht erfüllt werden. Es gelang nämlich nicht, einen bestimmten Schlauch ohne Rückwirkung auf seine Beweglichkeit dichter zu gestalten. Dabei nimmt die Undichtigkeit sowohl mit der Nennweite des Schlauches als auch mit der verarbeiteten Bandbreite zu. Größere Nennweiten werden jedoch in zunehmendem Maße erforderlich und eine größere Bandbreite ist deshalb notwendig, weil sie dem Schlauch eine größere Beweglichkeit gibt, indem der Anteil der Totzonen im Falz verringert wird, die durch die radialen Falzteile gegeben sind. Die Undichtigkeit nimmt aber auch mit kleiner werdender Kantenzahl zu.

Um die Dichtigkeit des Agraffschlauches zu verbessern, hat man zwar bereits versucht, die Kantenzahl des Schlauchquerschnittes erheblich zu vergrößern, um insbesondere für große Nennweiten zwischen benachbarten Kanten zu möglichst kleinen Strecken zu kommen. Damit läßt sich aber nicht die Parallelität der einzelnen Falzlagen des Bandes gewährleisten und es treten erhöhte Schwierigkeiten bei der Schlauchherstellung auf. Außerdem stellte sich heraus, daß sich die Undichtigkeiten nur unwesentlich verringern ließen und die Verdrehfestigkeit stark abnahm.

Aufgabe der Erfindung ist es daher, einen Agraffschlauch der eingangs genannten Art derart zu verbessern, daß die Parallelität aller Materiallagen über den gesamten Falz gleichmäßig gewährleistet und damit eine äußerst hohe Dichtigkeit des Agraffschlauches erreicht wird, wobei gleichzeitig die Beweglichkeit des Schlauches erhöht und der Herstellungsaufwand verringert werden.

Dabei liegt der Erfindung die Erkenntnis zugrunde, daß bisher der Verlauf des Falzes zwischen benachbarten Ecken bzw. Kanten des Schlauchquerschnittes nicht geradlinig ist. Vielmehr haben die äußeren Lagen bedingt durch innerhalb des Bandes verbleibende Spannungen einen etwas nach außen gewölbten, bogenförmigen Verlauf. Dies trifft jedoch für insbesondere die innerste Lage des Falzes nicht zu. Letztere weicht vielmehr ausgehend von der die genannten Ecken verbindenden Geraden unter den genannten Spannungen nach radial innen aus, so daß sie eine sowohl in Axialrichtung des Schlauches als auch in Umfangsrichtung nach innen gerichtete und damit kissenförmige Wölbung annimmt.

Hiervon ausgehend, ist die Aufgabe erfindungsgemäß dadurch gelöst, daß alle Lagen des Falzes zwischen benachbarten Schlauchecken zueinander parallel und gleichmäßig eng aneinanderliegend eine zur Schlauchaußenseite hin gerichtete Wölbung aufweisen und daß der Radius dieser Wölbung größer als der mittlere Schlauchradius ist.

Durch diese erfindungsgemäßen Maßnahmen ist also der bisher beschrittene Weg verlassen, der sich bemüht, jegliche Wölbung des Falzes zwischen benachbarten Ecken des Schlauchquerschnittes zu vermeiden, indem nunmehr allen Lagen des Falzes bewußt durch entsprechende Werkzeuge mit der Herstellung eine in Umfangsrichtung verlaufende, gleichmäßig nach außen gerichtete Wölbung gegeben bzw. aufgezwungen wird, in deren Richtung sich auch die nach der Herstellung in den Innenlagen verbleibenden Materialspannungen auswirken müssen, da nunmehr die Innenlagen aufgrund dieser Spannungen nicht mehr entgegen der aufgeprägten Wölbung unter Überschreitung der die Ecken verbindenden Geraden eine nach innen gerichtete Wölbung annehmen und sich damit von den äußeren Lagen lösen können. Denn diese Überschreitung der genannten Geraden würde eine Materialverkürzung und damit Spannungserhöhung bedeuten, der das Material der Falzinnenlagen selbstverständlich in entgegengesetzter Richtung ausweicht. Die erfindungsgemäßen Maßnahmen «wehren» sich also nicht mehr wie bisher dagegen, daß sich der Falz zwischen benachbarten Ecken des Schlauchquerschnittes nicht genau geradlinig ausbilden läßt, sondern sie unterstützen diesen Umstand noch, um so zu untereinander parallelen Falzlagen zu kommen, wenn deren Verlauf zwischen benachbarten Ecken des Schlauchquerschnittes auch in Umfangsrichtung leicht bogenförmig ist. Dabei ist jedoch, und das ist ein wesentliches Merkmal der Erfindung, das Material der Falzlagen in Längsrichtung des Schlauches nunmehr genau achsparallel bzw. geradlinig.

Hiermit ist eine Dichtigkeit erreicht, die diejenige vergleichbarer bekannter Schläuche um Größenordnungen überschreitet. So konnte beispielsweise die Leckrate eines vergleichbaren Schlauches durch Anwendung der Erfindung herabgesetzt werden auf weniger als ein Zehntel. Andererseits ist aber trotzdem die Beweglichkeit des Schlauches verbessert, da nunmehr die einzelnen Falzlagen nicht mehr unter der materialspannungsbedingten, gegenläufigen Wölbungstendenz gegeneinander verspannt sind.

Durch die Erfindung ist es außerdem möglich geworden, die Zahl der Ecken bzw. Kanten des Schlauchquerschnittes herabzusetzen, wodurch der Wickelvorgang erheblich erleichtert wird, und es können jetzt auch ohne Schwierigkeiten größere Bandbreiten bei gleicher Banddicke verarbeitet werden, durch die zusätzlich die Beweglichkeit des Schlauches erhöht, andererseits aber die vorhandenen Totzonen innerhalb des Falzes verringert werden.

Als zweckmäßig hat es sich erwiesen, daß der Wölbungsradius zwischen 20% und 100% größer als der mittlere Schlauchradius ist. Im Ergebnis ist für den Wölbungsradius das Eineinhalbfache des mittleren Schlauchradius vorteilhaft, wobei sich jedoch die endgültige Wahl in Abhängigkeit vom verarbeiteten Material der Bandbreite, der Eckenzahl des Schlauchquerschnittes etc. ergibt.

Bezüglich des Ausgangsmaterials für die Herstellung des erfindungsgemäßen Schlauches hat sich ein Verhältnis der Banddicke zur unprofilierten Bandbreite im Bereich von 1:40 bis 1:80 als besonders vorteilhaft erwiesen.

Weitere Merkmale und Einzelheiten der Erfindung ergeben sich aus deren nachfolgender Beschreibung anhand der Zeichnung in Gegenüberstellung zu einem bekannten Agraffschlauch. In der Zeichnung zeigen:

Fig. 1 die Seitenansicht eines Agraffschlauches, teilweise geschnitten;

Fig. 2 die Schnittansicht eines bekannten Agraffschlauches gemäß der Schnittlinie II-II in Fig. 1 in vereinfachter Darstellung;

Fig. 3 die Einzelheit III aus Fig. 2 in vergrößerter Darstellung;

Fig. 4 eine auszugsweise Schnittdarstellung gemäß der Schnittlinie IV-IV in Fig. 3;

Fig. 5 die Schnittansicht des neuen Agraffschlauches gemäß der Schnittlinie II-II in Fig. 1 in vereinfachter Darstellung;

Fig. 6 die Einzelheit VI in Fig. 5 in vergrößerter Darstellung und

Fig. 7 eine auszugsweise Schnittdarstellung gemäß der Schnittlinie VII-VII in Fig. 6.

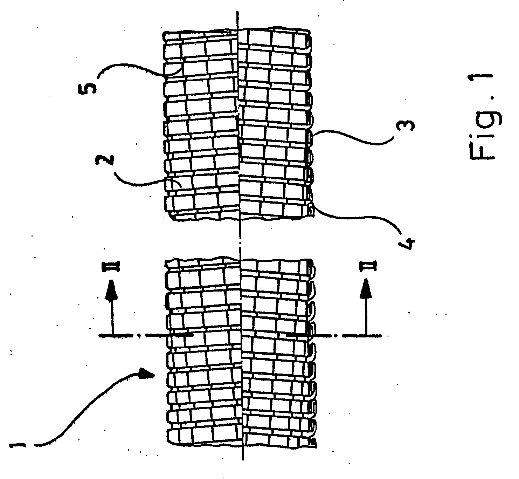

Fig. 1 zeigt ein Stück eines mehrkantigen Agraffschlauches 1, der durch schraubengangförmiges Wickeln eines Bandes 2 entstanden ist, dessen Kanten durch einen vierlagigen Falz 3 miteinander verbunden sind, wobei das Band zwischen den Falzen einen im wesentlichen radial verlaufenden Steg 4 bildet. Die über den Umfang gleichmäßig verteilten Ecken oder Kanten des Schlauchquerschnittes sind mit 5 bezeichnet.

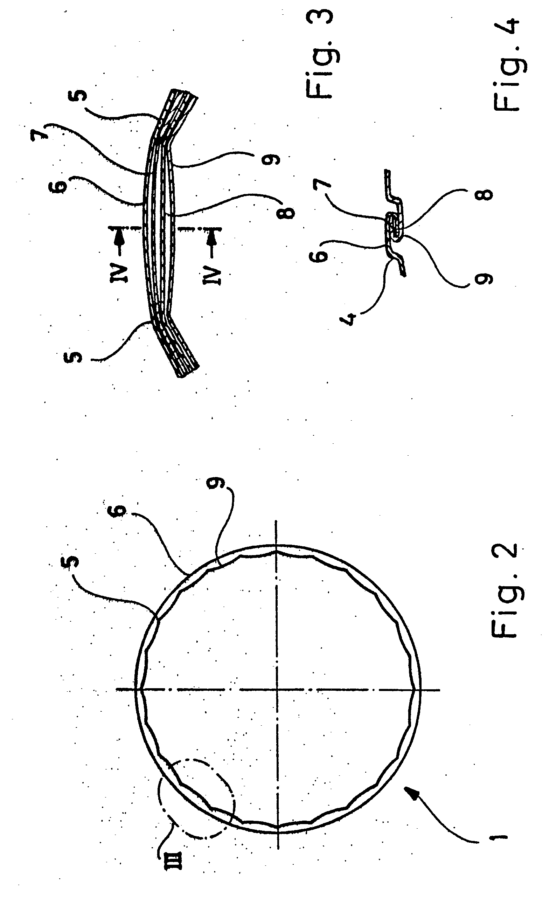

Fig. 2 zeigt gemäß der Schnittlinie II-II in Fig. 1 in vereinfachter Form den Schlauchquerschnitt, aus dem ersichtlich ist, daß die äußere Falzlage 6 zwischen benachbarten Ecken 5 nicht geradlinig, sondern leicht nach außen gewölbt bogenförmig verläuft, während die innere Falzlage 9 dem entgegengesetzt leicht nach innen gewölbt ist.

Diese an einem bekannten Agraffschlauch festgestellten Verhältnisse sind genauer aus der vergrößerten Einzeldarstellung gemäß Fig. 3 ersichtlich, die außerdem die Falzlagen 7 und 8 zeigt, die zwischen der äußeren Lage 6 und der inneren Lage 9 liegen. Hier kann man sehen, daß auch die Lage 7 noch leicht nach außen gewölbt ist, während die Lage 8 praktisch geradlinig zwischen den Ecken 5 verläuft, wie dies für alle Lagen 6 bis 9 wünschenswert wäre und bisher angestrebt wurde. In Verbindung mit Fig. 4 ist auch ersichtlich, daß insbesondere die innere Lage 9 nicht nur in der Ebene der Fig. 3 nach innen gewölbt ist, sondern auch senkrecht dazu. Dieser Umstand tritt um so stärker auf, je größer der Abstand benachbarter Ecken 5 ist und je größer die Breite des verarbeiteten Bandes ist, d.h. je größer der bezogen auf Fig. 4 waagerechte Querschnitt des Falzes ist.

Durch die insbesondere aus den Fig. 3 und 4 ersichtliche Gestaltung des bekannten Falzes zwischen benachbarten Ecken 5 des Schlauchquerschnittes ergibt sich eine erhebliche Undichtigkeit des Agraffschlauches, da die durch den Falz gebildeten Labyrinthdichtung nicht voll zur Geltung kommen kann. Andererseits sind die verschiedenen Lagen 6 bis 9 des Falzes unterschiedlich verspannt, wodurch sich eine Beeinträchtigung der Beweglichkeit des Schlauches ergibt.

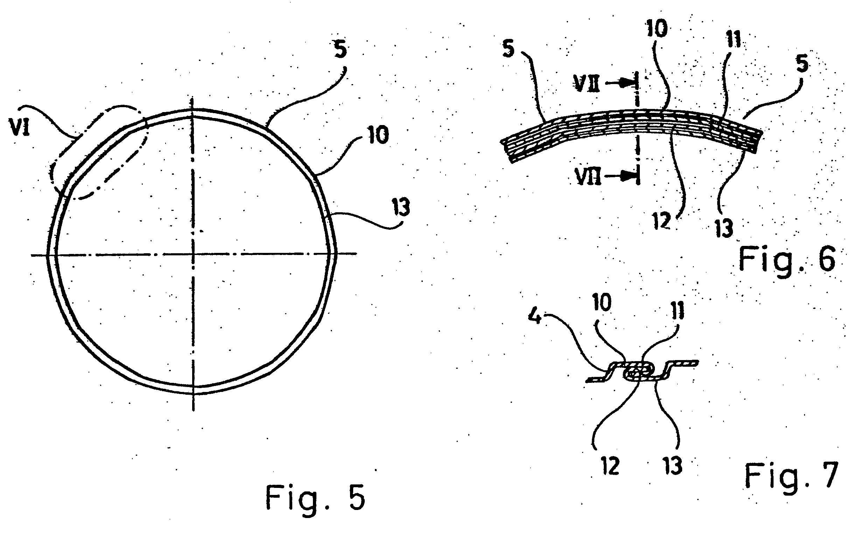

Fig. 5 zeigt einen vereinfachten Querschnitt des neuen Agraffschlauches entsprechend der Schnittlinie II-II in Fig. 1, aus der ersichtlich ist, daß nunmehr die äußere Falzlage 10 und die innere Falzlage 13 genau zueinander parallel sind. Dies gilt auch für die übrigen Falzlagen 11 und 12, wie aus der vergrößerten Darstellung der Einzelheit VI in Fig. 6 ersichtlich ist.

Dies ist dadurch erreicht, daß bei der Herstellung des Agraffschlauches durch Verwendung geeigneter Werkzeuge den Lagen 10 bis 13, insbesondere den inneren Lagen 12, 13 des Falzes eine nach außen gerichtete Wölbung aufgeprägt wurde, die dafür sorgt, daß sich die in diesen Lagen nach der Schlauchherstellung noch befindende Materialspannung nur in der Weise auswirken kann, daß sie die Lagen 12, 13 weiter nach außen zu drängen sucht, also eine zu den Lagen 10, 11 parallele Position. Die zu diesem Zweck insbesondere den Lagen 12, 13 aufzuprägende Wölbung ist bezüglich des zu ihrer Herstellung zu verwendenden Krümmungsradius abhängig vom verarbeiteten Material und dessen Stärke, wobei der bei der Herstellung verwendete Wölbungsradius von dem beim Fertigprodukt vorhandenen und in Fig. 6 dargestellten abweichen kann, um Federungen zu kompensieren, die das Bandmaterial nach dem Verlassen des Herstellungswerkzeuges ausführt.

Wie Fig. 7 zeigt, liegen die Bandlagen 10 bis 13 des jeweiligen Falzes auch in Achsrichtung des Schlauches parallel zueinander. Damit ist ein Falz geschaffen, der sich durch ein äußerst hohes Maß an Dichtigkeit auszeichnet, wie aus einem unmittelbaren Vergleich der Fig. 3 und 6 ersichtlich ist, und zwar auch für aus breiten Bändern hergestellte Agraffschläuche und bezogen auf Fig. 7 entsprechend breite Falze. Andererseits hat die Herstellung des anhand der Fig. 5 bis 7 geschilderten Agraffschlauches keinen Einfluß auf den für seine Herstellung erforderlichen Aufwand mit Ausnahme des Umstandes, daß entsprechend vorbereitete Werkzeuge verwendet werden müssen, was jedoch eine einmalige, für die Schlauchherstellung an sich erforderliche Maßnahme ist.

Bezüglich des für die Herstellung der Bogenförmigkeit insbesondere der inneren Falzlagen zu verwendenden Radius liegt dieser zweckmäßig in seiner Größe unterhalb der Größe des mittleren Schlauchdurchmessers, wobei im Mittel der Fälle ein Radius in der Größenordnung von 75% des Schlauchdurchmessers zweckmäßig ist.

**Patentansprüche**

1. Agraffschlauch mit regelmäßig vieleckigem Querschnitt, ohne zusätzliche Dichtung schraubengangförmig gewickelt aus einem vorprofilierten Metallband unter Verfalzen benachbarter Bandkanten, dadurch gekennzeichnet, daß alle Lagen (12, 13) des Falzes (3) zwischen benachbarten Schlauchecken (5) zueinander parallel und gleichmäßig eng aneinanderliegend eine zur Schlauchaußenseite hin gerichtete Wölbung aufweisen und daß der Radius dieser Wölbung größer als der mittlere Schlauchradius ist.

2. Agraffschlauch nach Anspruch 1, dadurch gekennzeichnet, daß der Wölbungsradius 20 bis 100% größer als der mittlere Schlauchradius ist.

3. Agraffschlauch nach Anspruch 1, dadurch gekennzeichnet, daß der Wölbungsradius 40 bis 70% größer als der mittlere Schlauchradius ist.

4. Agraffschlauch nach Anspruch 1, dadurch gekennzeichnet, daß der Wölbungsradius dem Eineinhalbfachen des mittleren Schlauchradius entspricht.

5. Agraffschlauch nach einem der vorhergehenden Ansprüche, dadurch gekennzeichnet, daß das Verhältnis der Banddicke zur unprofilierten Bandbreite im Bereich von 1:40 bis 1:80 liegt.

**Claims**

1. Clasped flexible tube with regularly polygonal cross-section, wound in helical form without additional sealing from a pre-profiled metal strip with clasp-jointing of adjacent strip edges, characterised in that all layers (12, 13) of the clasp-joint (3) between adjacent tube corners (5), lying mutually parallel and uniformly closely against one another, have a curvature directed to the outside of the tube and in that the radius of this curvature is greater than the mean tube radius.

2. Clasped flexible tube according to Claim 1, characterised in that the radius of curvature is 20 to 100% greater than the mean tube radius.

3. Clasped flexible tube according to Claim 1, characterised in that the radius of curvature is 40 to 70% greater than the mean tube radius.

4. Clasped flexible tube according to Claim 1, characterised in that the radius of curvature corresponds to one and a half times the mean tube radius.

5. Clasped flexible tube according to one of the preceding Claims, characterised in that the ratio of the strip thickness to the unprofiled strip width lies in the range from 1:40 to 1:80.

**Revendications**

1. Tuyau agrafé à section transversale polygonale régulière, sans joint d'étanchéité additionnel, formé par enroulement en hélic d'un feuillard métallique préalablement profilé, avec assemblage des bords adjacents du feuillard par agrafage, caractérisé en ce que, entre les arêtes (5) adjacentes du tuyau, toutes les couches (12, 13) du pli d'agrafage (3) présentent un bombé dirigé vers le côté extérieur du tuyau, en étant parallèles entre elles et étroitement et uniformément adjacentes, et en ce que le rayon de ce bombé est supérieur au rayon moyen du tuyau.

2. Tuyau agrafé selon la revendication 1, caractérisé en ce que le rayon du bombé est supérieur de 20 à 100% au rayon moyen du tuyau.

3. Tuyau agrafé selon la revendication 1, caractérisé en ce que le rayon du bombé est supérieur de 40 à 70% au rayon moyen du tuyau.

4. Tuyau agrafé selon la revendication 1, caractérisé en ce que le rayon du bombé correspond à une fois et demi le rayon moyen du tuyau.

5. Tuyau agrafé selon une des revendications précédentes, caractérisé en ce que le rapport de l'épaisseur du feuillard à la largeur non profilée du feuillard est dans l'intervalle de 1:40 à 1:80.

Fig. 1

EP 0 226 719 B1

Fig. 3

Fig. 4

Fig. 2

Fig. 6

Fig. 7

Fig. 5